# EUROPÄISCHE PATENTSCHRIFT

(11) **EP 3 736 607 B1**
(45) Veröffentlichungstag und Bekanntmachung des Hinweises auf die Patenterteilung: **21.07.2021**
(21) Anmeldenummer: 20167638.4
(22) Anmeldetag: 02.04.2020
(51) Int. Cl.: G01S 17/86, G01S 17/931, G01S 17/42, G01P 3/56, G01P 7/00

(54) **ABSICHERN DER UMGEBUNG EINES FAHRZEUGS**
SECURING THE ENVIRONMENT OF A VEHICLE
SÉCURISATION DE L'ENVIRONNEMENT D'UN VÉHICULE

(30) Priorität: 06.05.2019 DE 102019111642
(43) Veröffentlichungstag der Anmeldung: 11.11.2020
(73) Patentinhaber: SICK AG, 79183 Waldkirch (DE)
(72) Erfinder: Mißbach, Thomas, 79014 Freiburg (DE); Rist, Jonas, 79106 Freiburg (DE); Matt, Christian, 77716 Haslach (DE)

(56) Entgegenhaltungen:
- EP-A1- 2 302 416
- DE-A1-102016 106 294
- US-A1- 2007 173 984
- US-A1- 2015 294 453
- US-B1- 8 072 581

## Beschreibung

Die Erfindung betrifft ein Sicherheitssystem und ein Verfahren zum Absichern der Umgebung eines Fahrzeugs nach dem Oberbegriff von Anspruch 1 beziehungsweise 13.

Zur Vermeidung von Unfällen werden optoelektronische Sensoren eingesetzt, welche die Umgebung eines Fahrzeugs überwachen. Ein großes Anwendungsfeld dafür sind fahrerlose Transportsysteme beispielsweise in der Logistik. Der Sensor erkennt, wenn Objekte den Fahrweg kreuzen, um das Fahrzeug rechtzeitig abzubremsen oder umzulenken, wenn ein Zusammenstoß mit einer Person droht.

Ein dafür besonders geeigneter Sensor ist ein Laserscanner. Darin überstreicht ein von einem Laser erzeugter Lichtstrahl mit Hilfe einer Ablenkeinheit periodisch einen Ausschnitt der Umgebung. Das Licht wird an dort befindlichen Objekten remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile, insbesondere einer Frontscheibe.

Ein Laserscanner, der diese Anforderungen erfüllt, wird als Sicherheitslaserscanner bezeichnet und ist beispielsweise aus der DE 43 40 756 A1 bekannt. Dabei wird ein Schutzfeld überwacht, in dem sich kein Objekt oder bei komplexerer Auswertung kein unerwartetes Objekt befinden darf. Bei einem unzulässigen Schutzfeldeingriff wird eine Absicherungsmaßnahme eingeleitet. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und damit die Verfügbarkeit des Fahrzeugs und der umgebenden Anlage zu erhöhen.

Da bei der Absicherung eines Fahrzeugs die Zusammenstoßgefahr geschwindigkeitsabhängig ist, bieten manche bekannte Sicherheitslaserscanner die Möglichkeit an, die Schutzfeldgeometrien zu verändern oder umzuschalten. Außerdem ermöglichen sie den Anschluss von Drehgebern oder Encodern, welche die Drehbewegung der Räder und damit die Position beziehungsweise Geschwindigkeit des Fahrzeugs messen. So können Schutzfelder der Fahrzeuggeschwindigkeit angepasst werden, um sicherzustellen, dass der Bremsweg bei einer Schutzfeldverletzung stets ausreichend bleibt. Das erlaubt ein dynamischeres Fahrzeugverhalten und einen effizienteren Einsatz der Fahrzeuge.

Allerdings wird dann die Geschwindigkeit des Fahrzeugs ein sicherheitsrelevanter Messwert und muss mit einer dem geforderten Sicherheitsniveau im Sinne einschlägiger Normen, beispielsweise einem Performance Level, angemessenen Zuverlässigkeit erfasst werden. Eine denkbare Anforderung ist die Einfehlersicherheit, was bedeutet, dass die Geschwindigkeitsbestimmung bei Auftreten eines zufälligen Fehlers weiterhin verlässlich arbeitet oder den Fehler erkennt und dafür sorgt, dass das Fahrzeug in einen sicheren Zustand übergeht.

Diese Sicherheit lässt sich erzielen, indem die Geschwindigkeit aus zwei Quellen erfasst wird. In einer Variante werden die nicht-sicheren Geschwindigkeitssignale eines angeschlossenen Drehgebers mit einer optischen Geschwindigkeitsbestimmung aus den über die Zeit veränderlichen Abstandsmesswerten des Sicherheitslaserscanners kombiniert. Das Problem hierbei ist, dass dafür ein geeignetes, unbewegtes Objekt im Sichtbereich vorhanden sein muss, wie eine feststehende Wand, deren Relativbewegung zum Fahrzeug in eine Geschwindigkeit umgerechnet wird. Es gibt daher zu viele Szenarien, in denen die optische Geschwindigkeitsbestimmung nicht verlässlich genug ist oder ganz ausfällt. Dazu zählen translationsinvariante Umgebungen, wie die Fahrt über ausgedehnte Freiflächen oder ein langer Gang mit glatten Seitenwänden, weniger praxisrelevante rotationsinvariante Umgebungen und große bewegte Objekte im Sichtfeld, wie andere Fahrzeuge, deren Geschwindigkeit der Sicherheitslaserscanner nicht kennt und die fälschlich als ruhend angenommen werden oder durch die an sich zur Geschwindigkeitsbestimmung geeignete ruhende Objekte verdeckt sind.

In einer anderen Variante werden zwei unabhängige Drehgeber eingesetzt, die beide ihre Signale an den Sicherheitslaserscanner weitergeben, wobei dann die Differenz der gemessenen Geschwindigkeiten innerhalb einer vorgegebenen Toleranz liegen muss. Hier wird die notwendige Fehlersicherheit durch Redundanz hergestellt. Ein wesentlicher Nachteil hieran sind die Kosten und der beanspruchte Bauraum für den zweiten Drehgeber, der zusätzlich zu dem ersten Drehgeber mechanisch und elektrisch an das Antriebssystem angebunden werden muss, was besonders bei kleinen Fahrzeugen konstruktive Schwierigkeiten mit sich bringt. Auch am Sicherheitslaserscanner sind zwei zusätzliche Eingangsklemmen zur sicheren, zweikanaligen Übermittlung der Signale des zweiten Drehgebers erforderlich. Selbst wenn dies alles in Kauf genommen wird, können auf diese Weise nur Fehler detektiert werden, die auf die Überschreitung der vorgegebenen Toleranzschwellen des Differenzwerts zurückzuführen sind, einschließlich des Ausfalls eines der Drehgeber. Es bleiben jedoch nicht detektierbare Fehlerfälle, insbesondere wenn beide Drehgeber den Wert Null liefern.

Aus der EP 2 302 416 A1 ist eine Fahrzeugabsicherung mittels Sicherheitslaserscanner mit geschwindigkeitsabhängig veränderten Schutzfeldern bekannt. Dort wird die Sicherheit der Geschwindigkeitserfassung dadurch erzielt, dass der Sicherheitslaserscanner zusätzlich zu den Signalen eines Drehgebers auch Sollgeschwindigkeitssignale der Fahrzeugsteuerung erhält und damit vergleicht. Die Sollgeschwindigkeit ist aber nicht immer ein verlässlicher Vergleichswert, und überdies müssen geeignete Schnittstellen in der Fahrzeugsteuerung geschaffen werden, auf die regelmäßig nicht einmal ein Zugriff für eine solche Funktionserweiterung besteht.

Die US 2015/0294453 A1 offenbart eine Bildauswertungsvorrichtung eines Fahrzeugs. Um die Straßenbegrenzungen korrekt zu erfassen, wird ein Fluchtpunkt des Kamerabildes eingelerrnt. Dafür möchte das System wissen, ob sich das Fahrzeug auf der Straße bewegt oder sich die Räder lediglich auf einem Prüfstand drehen. Zu diesem Zweck wird ein integrierter Beschleunigungswert eines Beschleunigungssensors mit einem von einem Radgeschwindigkeitssensor abgeleiteten Geschwindigkeitswert plausibilisiert.

Die DE 10 2016 106 294 A1 offenbart eine betriebssichere Fahrzeuggeschwindigkeitsabschätzung durch Datenfusion von 6-FOD-IMU, GPS und Radar. Aus den Daten der genannten Sensoren wird ein sekundäres Geschwindigkeitsabschätzungssystem gespeist, das dann einspringt, wenn das auf kinematischen Sensoren basierende primäre Geschwindigkeitsabschätzungssystem in einem eigensicheren Entscheidungsprozess einen Ausfall erkannt hat.

Die US 2007/0173984 A1 befasst sich mit einer Stoppbestimmungsvorrichtung für ein Fahrzeug. Die Geschwindigkeitsbestimmung wird bei sehr langsamen Geschwindigkeiten als nicht ausreichend zuverlässig angesehen. Das Anhalten wird mittels eines Beschleunigungssensors daran erkannt, dass wegen der kurzen Schaukelbewegung des Fahrzeugs die Beschleunigung einen Vorzeichenwechsel erfährt.

Die US 8 072 581 B1 betrifft ein Flash-LIDAR mit variablem Beleuchtungsbereich.

Es ist daher Aufgabe der Erfindung, eine sichere Geschwindigkeitserfassung ohne die genannten Nachteile zu ermöglichen.

Diese Aufgabe wird durch ein Sicherheitssystem und ein Verfahren zum Absichern der Umgebung eines Fahrzeugs nach Anspruch 1 beziehungsweise 13 gelöst. Das Fahrzeug ist insbesondere ein fahrerloses Fahrzeug (AGV, Automated Guided Vehicle, oder AGC, Automated Guided Container). Die Fahrzeugumgebung wird mit einem Sicherheitssensor optisch überwacht. Die Begriffe Sicherheit und sicher sollen über die gesamte Beschreibung hinweg eine Fehlersicherheit oder Fehleraufdeckung im Sinne der einschlägigen Normen bedeutet. Ein Eingang des Sicherheitssystems erhält ein Signal von einem ersten Kinematiksensor, womit ein erster Geschwindigkeitswert für die Geschwindigkeit des überwachten Fahrzeugs bestimmt werden kann. Der erste Kinematiksensor stellt dafür bereits ein Geschwindigkeitssignal oder alternativ ein Signal zur Verfügung, aus dem sich die Geschwindigkeit bestimmen lässt, wie eine Position oder ein zurückgelegter Weg.

Eine Steuer- und Auswertungseinheit erfasst aus den Sensordaten des Sicherheitssensors Objekte in der Umgebung und bewertet, ob eines der erfassten Objekte eine Gefahr darstellt. Bei drohender Gefahr erfolgt eine sicherheitsgerichtete Reaktion vorzugsweise über die Fahrzeugsteuerung, etwa eine Notbremsung, ein Ausweichen oder eine Verringerung der Geschwindigkeit. Diese Gefahrenbewertung erfolgt unter Berücksichtigung der Geschwindigkeit des Fahrzeugs. Beispielsweise muss für ein fernes Objekt im Fahrweg bei hoher Geschwindigkeit gebremst werden, bei geringer Geschwindigkeit dagegen nicht, sondern erst zu einem späteren Zeitpunkt, falls daraus ein nahes Objekt im Fahrweg wird. Die Steuer- und Auswertungseinheit ist je nach Ausführungsform in den Sicherheitssensor integriert, in einer an den Sicherheitssensor angeschlossenen Sicherheitssteuerung implementiert, oder verschiedene Teilfunktionen sind auf beide Komponenten verteilt.

Die Erfindung geht von dem Grundgedanken aus, zusätzlich eine Inertialmesseinheit (IMU, Inertial measurement unit, Inertialsensor) einzusetzen, um mit deren Bewegungsinformation die Messung der Geschwindigkeit des Fahrzeugs durch den ersten Kinematiksensor zu überprüfen. Durch diese Plausibilisierung des ersten Geschwindigkeitswerts des ersten Kinematiksensors mit der Bewegungsinformation der Inertialmesseinheit wird die erfasste Geschwindigkeit sicher. Dabei ist klar, dass kein unmittelbarer Vergleich der unterschiedlichen physikalischen Größen möglich ist, die Inertialmesseinheit misst originär die Beschleunigung und nicht die Geschwindigkeit. Sehr wohl lässt sich aber aus dem ersten Geschwindigkeitswert beziehungsweise dessen Historie eine Erwartung für die Beschleunigung oder umgekehrt aus der Beschleunigung eine Erwartung für die Geschwindigkeit ableiten. Das Aufdecken eines Fehlers in der Geschwindigkeitsbestimmung führt zu einer sicherheitsgerichteten Reaktion, die mit einer Anzeige der Ursache verbunden sein kann. Alternativ wird bei einer nicht mehr zuverlässigen Geschwindigkeitsbestimmung mit worst-case-Annahmen, wie einer maximalen Fahrzeuggeschwindigkeit gearbeitet.

Für die Gefahrenbewertung wird vorzugsweise der erste Geschwindigkeitswert des ersten Kinematiksensors genutzt, die Bewegungsinformation ist dann nur ein Hilfswert, damit die Geschwindigkeitserfassung sicher wird. Es ist aber auch denkbar, Beschleunigungen beispielsweise aufzuintegrieren und somit auch mittels der Inertialmesseinheit die Geschwindigkeit zu bestimmen und diesen Wert der weiteren Auswertung zu verwenden, oder die Geschwindigkeitsinformationen beider Quellen miteinander zu verrechnen.

Die Erfindung hat den Vorteil, dass die Geschwindigkeit auch in den einleitend beschriebenen ungünstigen Szenarien sicher erfasst wird. Zwei redundante Drehgeber oder eine Kommunikation mit der Fahrzeugsteuerung für eine zusätzliche Geschwindigkeitsinformation sind nicht mehr erforderlich. Sofern solche Quellen doch genutzt werden, wird damit ein noch höheres Sicherheitsniveau erreicht. Es lassen sich zahlreiche Fehlerszenarien erkennen, beispielsweise auch ein blockiertes oder teilweise blockiertes Rad.

Die Steuer- und Auswertungseinheit ist bevorzugt dafür ausgebildet, aus den Sensordaten des Sicherheitssensors mittels optischer Geschwindigkeitsschätzung einen zweiten Geschwindigkeitswert für die Geschwindigkeit des Fahrzeugs zu bestimmen. Eine zweite Geschwindigkeitsmessung erhöht das Sicherheitsniveau. Für eine optische Geschwindigkeitsschätzung sind verschiedene Verfahren denkbar, wie optischer Fluss, SLAM-Verfahren zur Navigation und damit wiederholten Selbstlokalisation oder optische Messung des Abstands zu Umgebungsobjekten und Auswertung der Veränderung des Abstands zu feststehenden Objekten über die Zeit. Der zweite Geschwindigkeitswert wird dabei rein auf Basis von Auswertungen erfasst, ohne zusätzliche Sensorik und Anschlüsse.

Das Sicherheitssystem weist bevorzugt einen zweiten Eingang auf, der zur Bestimmung eines zweiten Geschwindigkeitswerts für die Geschwindigkeit des Fahrzeugs mit einem zweiten Kinematiksensor verbindbar ist. In dieser Ausführungsform wird statt einer optischen Geschwindigkeitsschätzung ein zusätzlicher Sensor genutzt. Prinzipiell ließen sich auch zwei Kinematiksensoren mit einer optischen Geschwindigkeitsschätzung und einer Inertialmesseinheit kombinieren. So viele Quellen sind aber für übliche Sicherheitsniveaus nicht erforderlich, und damit ist der Aufwand dafür meist nicht gerechtfertigt.

Der erste Kinematiksensor ist vorzugsweise ein Drehgeber, der mindestens mittelbar mit einer Fahrzeugachse des Fahrzeugs verbunden ist, desgleichen der zweite Kinematiksensor, sofern vorhanden. Die Weg- oder Geschwindigkeitsinformation wird somit aus der Drehung der Räder des Fahrzeugs abgeleitet.

Die Steuer- und Auswertungseinheit ist bevorzugt dafür ausgebildet, den ersten Geschwindigkeitswert und den zweiten Geschwindigkeitswert und/oder den zweiten Geschwindigkeitswert und die Bewegungsinformation miteinander zu vergleichen. Aufgrund der optischen Geschwindigkeitsschätzung oder des zweiten Kinematiksensors steht ein zweiter Geschwindigkeitswert zur Verfügung. Diese beiden Geschwindigkeitswerte werden nun untereinander verglichen, beispielsweise ob deren Differenz in einem Toleranzintervall liegt, beziehungsweise mit der Bewegungsinformation der Inertialmesseinheit plausibilisiert.

Die Steuer- und Auswertungseinheit ist bevorzugt dafür ausgebildet, die Geschwindigkeit des Fahrzeugs mit Hilfe des ersten Kinematiksensors, einer optischen Geschwindigkeitsschätzung aus den Sensordaten des Sicherheitssensors und der Bewegungsinformation der Inertialmesseinheit auf sichere Weise zu bestimmen. Das fasst schon genannte Merkmale nochmals zusammen. In dieser Ausführungsform ist eine dreifache diversitäre Redundanz aus erstem Kinematiksensor, Inertialmesseinheit und optischer Geschwindigkeitsschätzung geschaffen. Dabei werden Kosten durch Verzicht auf einen Encoderstrang am Fahrzeug eingespart.

Die Steuer- und Auswertungseinheit ist bevorzugt dafür ausgebildet, die Geschwindigkeit des Fahrzeugs mit Hilfe des ersten Kinematiksensors, des zweiten Kinematiksensors und der Bewegungsinformation der Inertialmesseinheit auf sichere Weise zu bestimmen. Das ist eine alternative Ausführungsform mit Zusammenfassung schon genannter Merkmale. Dabei gibt es eine redundante Erfassung mit zwei Kinematiksensoren und eine zusätzliche diversitär-redundante Überprüfung durch die Inertialmesseinheit.

Die Steuer- und Auswertungseinheit ist bevorzugt dafür ausgebildet, im Falle eines Stillstandwertes des ersten Geschwindigkeitswerts und des zweiten Geschwindigkeitswerts zu prüfen, ob die Bewegungsinformation mit einem Stillstand des Fahrzeugs verträglich ist. Ein fälschlich angenommener Stillstand ist eine besonders kritische Situation. Wenn der erste und zweite Geschwindigkeitswert einen Stillstand anzeigen, insbesondere beide Kinematiksensoren den Wert Null mit einer gewissen Toleranz ausgeben, dann muss die Bewegungsinformation der Inertialmesseinheit mit einem Stillstehen des Fahrzeugs verträglich sein.

Die Bewegungsinformation muss bevorzugt keine Bewegung anzeigen, wenn die Stillstandwerte über ein Zeitintervall hinweg vorliegen, und/oder eine passende Bremsbeschleunigung anzeigen, wenn erster Geschwindigkeitswert und zweiter Geschwindigkeitswert auf die Stillstandwerte abfallen. Es werden somit für die Stillstandüberwachung noch zwei Sonderfälle unterschieden. Einmal können beide Geschwindigkeitswerte eine gewisse Zeit einen Stillstand anzeigen. Dann muss sich das Fahrzeug in Ruhe befinden, und dementsprechend darf die Inertialmesseinheit auch keine Beschleunigung messen. Andererseits können die Geschwindigkeitswerte auch auf den Stillstandwert abfallen. Dann wird von der Inertialmesseinheit die Messung einer Beschleunigung erwartet, die einem Abbremsen von der zuletzt gemessenen Geschwindigkeit entspricht. Wird die jeweilige Erwartung an die Messung der Inertialmesseinheit nicht erfüllt, so ist ein Fehler erkannt.

Die Inertialmesseinheit und/oder die Steuer- und Auswertungseinheit ist vorzugsweise in den Sicherheitssensor integriert. Eine Inertialmesseinheit in dem Sicherheitssensor hat den Vorteil, dass dafür keinerlei Anschlüsse notwendig sind, anders als bei einem Kinematiksensor, der Fahrzeugachsen überwacht. Die Inertialmesseinheit befindet sich damit auch in der sicheren Umgebung des Sicherheitssensors, so dass diese sicherheitsrelevante Funktionalität von außen gekapselt ist. Aus ähnlichen Gründen ist es vorteilhaft, die Steuer- und Auswertungseinheit in dem Sicherheitssensor unterzubringen. Zumindest ein Teil davon kann aber in einer an den Sicherheitssensor angeschlossenen Sicherheitssteuerung implementiert sein.

Der Sicherheitssensor ist bevorzugt als Sicherheitslaserscanner mit einem Lichtsender zum Aussenden eines Lichtstrahls, einer drehbaren Ablenkeinheit zur periodischen Ablenkung des Lichtstrahls in die Umgebung, einer Winkelmesseinheit zur Bestimmung einer Winkelstellung der Ablenkeinheit und einem Lichtempfänger zum Erzeugen eines Empfangssignals aus dem von Objekten in der Umgebung remittierten oder reflektierten Lichtstrahls ausgebildet, wobei die Steuer- und Auswertungseinheit mit Hilfe des Empfangssignals eine Lichtlaufzeit zu den jeweils mit dem Lichtstrahl angetasteten Objekten bestimmt und insbesondere für die Bewertung, ob eine Absicherung des Fahrzeugs erfolgt oder nicht, mindestens ein in Abhängigkeit von der Geschwindigkeit eingestelltes Schutzfeld auf Objekteingriffe überwacht. Die Ablenkeinheit kann je nach Bauform ein Drehspiegel oder ein sich drehender Abtastkopf sein, in dem Lichtsender und/oder Lichtempfänger untergebracht sind. Bei zusätzlicher Verkippung der Ablenkeinheit oder mehreren in Elevation beabstandeten Abtaststrahlen wird die überwachte Umgebung von einer Ebene zu einem dreidimensionalen Raumbereich erweitert. Sofern ein Teil der Steuer- und Auswertungseinheit in eine angeschlossene Sicherheitssteuerung ausgelagert ist, erfolgt vorzugsweise zumindest die Lichtlaufzeitmessung oder auch noch die Schutzfeldauswertung in dem Sicherheitslaserscanner. Die Sicherheitssteuerung kümmert sich dann beispielsweise um die sichere Geschwindigkeitserfassung und Umschaltung der Schutzfelder.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Sicherheitslaserscanners mit einer Inertialmesseinheit;
- Fig. 2: eine schematische Darstellung eines mit einem optoelektronischen Sicherheitssensor abgesicherten Fahrzeugs und sicherer Geschwindigkeitsbestimmung durch einen Drehgeber und optische Geschwindigkeitsschätzung;
- Fig. 3: eine schematische Darstellung eines Fahrzeugs ähnlich Figur 2, jedoch mit Geschwindigkeitsbestimmung durch zwei Drehgeber;
- Fig. 4: eine schematische Darstellung eines Fahrzeugs ähnlich Figur 2, jedoch mit zumindest einem Teil der Auswertungen in einer Sicherheitssteuerung; und
- Fig. 5: eine schematische Darstellung eines Fahrzeugs ähnlich Figur 3, jedoch mit zumindest einem Teil der Auswertungen in einer Sicherheitssteuerung.

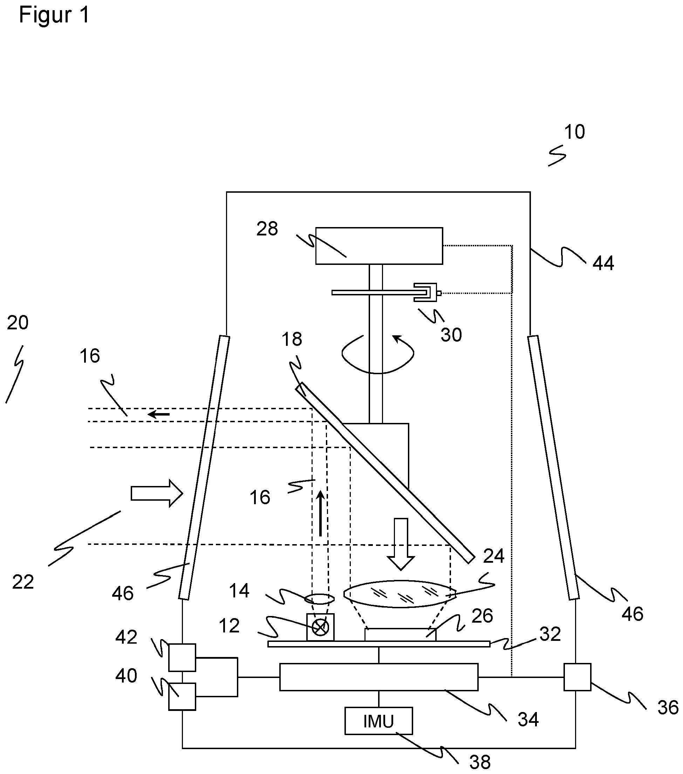

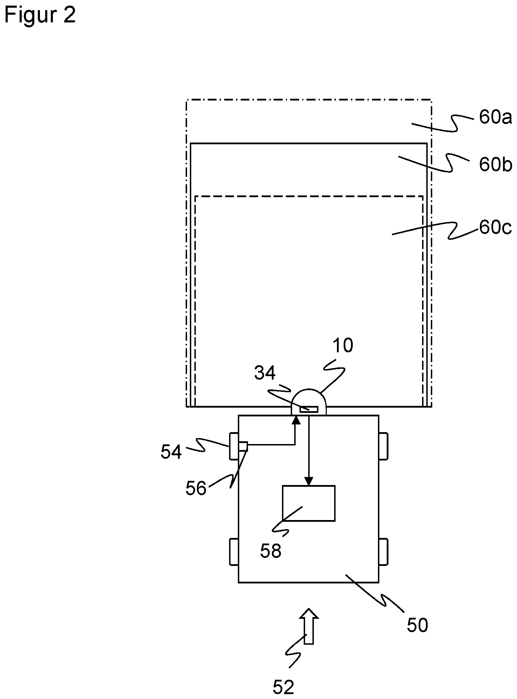

Fig. 1 zeigt eine schematische Schnittdarstellung durch einen Sicherheitslaserscanner 10, der zur Absicherung eines Fahrzeugs eingesetzt werden kann, wie dies im Anschluss unter Bezugnahme auf die Figuren 2 bis 5 erläutert wird.

In dem Sicherheitslaserscanner 10 erzeugt ein Lichtsender 12, beispielsweise mit einer Laserlichtquelle im infraroten oder einem anderen Spektralbereich, mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Sicherheitslaserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet und rotiert durch Antrieb eines Motors 28 kontinuierlich. Alternativ kann ein Messkopf samt Lichtsender 12 und Lichtempfänger 26 rotieren. Die jeweilige Winkelstellung des Motors 28 beziehungsweise der Ablenkeinheit 18 wird über eine Winkelmesseinheit 30 erfasst, hier beispielhaft in Form einer mitdrehenden Codescheibe und einer Gabellichtschranke.

Der von dem Lichtsender 12 erzeugte Sendelichtstrahl 16 überstreicht somit den durch die Rotationsbewegung erzeugten Überwachungsbereich 20. Die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt. In der dargestellten Ausführungsform sind Lichtsender 12 und Lichtempfänger 26 auf einer gemeinsamen Leiterkarte 32 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von der Winkelmesseinheit 30 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt, beispielsweise mit einem Puls- oder Phasenverfahren, und unter Verwendung der Lichtgeschwindigkeit auf die Entfernung des Objektes von dem Sicherheitslaserscanner 10 geschlossen.

Diese Auswertung erfolgt in einer Auswertungseinheit 34, die dafür mit dem Lichtsender 12, dem Lichtempfänger 26, dem Motor 28 und der Winkelmesseinheit 30 verbunden ist. Somit stehen über den Winkel und die Entfernung zweidimensionale Polarkoordinaten aller Objekte in dem Überwachungsbereich 20 zur Verfügung. Die Auswertungseinheit 34 prüft, ob ein unzulässiges Objekt in mindestens ein innerhalb des Überwachungsbereichs 20 festgelegtes Schutzfeld eingreift. Ist das der Fall, wird über einen Sicherheitsausgang 36 (OSSD, Output Signal Switching Device) ein Absicherungssignal ausgegeben. Der Sicherheitslaserscanner 10 ist durch Maßnahmen entsprechend der einleitend genannten Normen sicher ausgebildet.

In dem Sicherheitslaserscanner 10 ist ferner eine Inertialmesseinheit 38 untergebracht. Dabei kann es sich beispielsweise um einen integrierten MEMS-Baustein handeln. Die Inertialmesseinheit 38 bestimmt die Beschleunigung vorzugsweise in alle drei Raumrichtungen und die Winkelgeschwindigkeit um alle drei Achsen. Bei bekannter Montageposition des Sicherheitslaserscanners 10 an einem Fahrzeug genügen prinzipiell auch weniger Freiheitsgrade, beispielsweise zur Messung der Beschleunigung nur nach vorne in Fahrtrichtung.

Der Sicherheitslaserscanner 10 weist einen Eingang 40 oder zwei Eingänge 40, 42 für den Anschluss eines Sensors zur Geschwindigkeitsmessung auf. Die darüber erfasste Geschwindigkeit eines Fahrzeugs, auf dem der Sicherheitslaserscanner 10 montiert ist, wird in einer noch zu beschreibenden Weise zwischen den über die beiden Eingänge erhaltenen Geschwindigkeiten, die Beschleunigungsinformation der Inertialmesseinheit 38 und gegebenenfalls eine optische Geschwindigkeitsschätzung aus den Messdaten des Sicherheitslaserscanners in einer noch zu beschreibenden Weise verifiziert und damit zu einer sicheren Information im Sinne der einleitenden Normen. Die Schutzfelder können dann an die aktuelle Geschwindigkeit angepasst werden.

Alle genannten Funktionskomponenten sind in einem Gehäuse 44 angeordnet, das im Bereich des Lichtaus- und Lichteintritts eine Frontscheibe 46 aufweist.

Figur 2 zeigt eine schematische Darstellung eines Fahrzeugs 50, insbesondere eines fahrerlosen oder autonomen Fahrzeugs (AGV, Automated Guided Vehicle), auf dem mindestens ein Sicherheitslaserscanner 10 zur Absicherung der Fahrwege montiert ist. Sofern sich das Fahrzeug 50 nur in eine Richtung 52 bewegt, genügt der frontseitige Sicherheitslaserscanner 10, ansonsten sind zusätzliche Sicherheitslaserscanner 10 beispielsweise auf der Rückseite zur Absicherung der Umgebung bei Rückwärtsfahrt möglich. Statt eines Sicherheitslaserscanners 10 können auch andere optoelektronische Sicherheitssensoren eingesetzt werden, wie beispielsweise eine Kamera, speziell eine 3D-Kamera nach dem Lichtlaufzeitprinzip oder eine Stereokamera.

Das Fahrzeug 50 bewegt sich auf Rädern 54 fort, wobei ein Drehgeber 56 die Drehrate eines der Räder 54 misst, um die Geschwindigkeit des Fahrzeugs 50 zu bestimmen und dies über eine Verbindung mit dessen entsprechendem Eingang 40, 42 dem Sicherheitslaserscanner 10 zu übermitteln. Eine Fahrzeugsteuerung 58 steuert das Fahrzeug 50, gibt also dessen Beschleunigungen, Lenkeinschläge, Geschwindigkeiten und dergleichen vor. Vorzugsweise ist der Sicherheitsausgang 36 des Sicherheitslaserscanners 10 mit der Fahrzeugsteuerung 58 verbunden, um das Fahrzeug 50 bei Erkennung einer Gefahr abzusichern.

Der Drehgeber 56 sowie dessen Verbindung zum Sicherheitslaserscanner 10 und auch dessen Eingang 40, 42 sind vorzugsweise einkanalig beziehungsweise nicht sicher ausgestaltet. Die Zuverlässigkeit der Geschwindigkeitsmessung wird mit der Inertialmesseinheit 38 erhöht. Damit ist unabhängig von der Umgebung des Sicherheitslaserscanners 10 eine zumindest grobe Abschätzung der Änderung der Bahngeschwindigkeit und eine genaue Abschätzung der Änderung der Rotation messbar. Anhand der mit dem Drehgeber 56 gemessenen Geschwindigkeit und gegebenenfalls einer gespeicherten Bewegungshistorie des Sicherheitslaserscanners 10 kann die Steuer- und Auswertungseinheit 34 eine Erwartung für die Signale der Inertialmesseinheit 38 berechnen, also deren Winkelgeschwindigkeit und Linear-Beschleunigung in allen erforderlichen Achsen. Das wird dann mit dem tatsächlichen Ausgangssignal der Inertialmesseinheit 38 verglichen. Bei hinreichender Übereinstimmung wird die gemessene Geschwindigkeit als sicher angesehen. Umgekehrt können auch die Beschleunigungen von der Inertialmesseinheit 38 integriert und mit der von dem Drehgeber 56 bestimmten Geschwindigkeit verglichen werden.

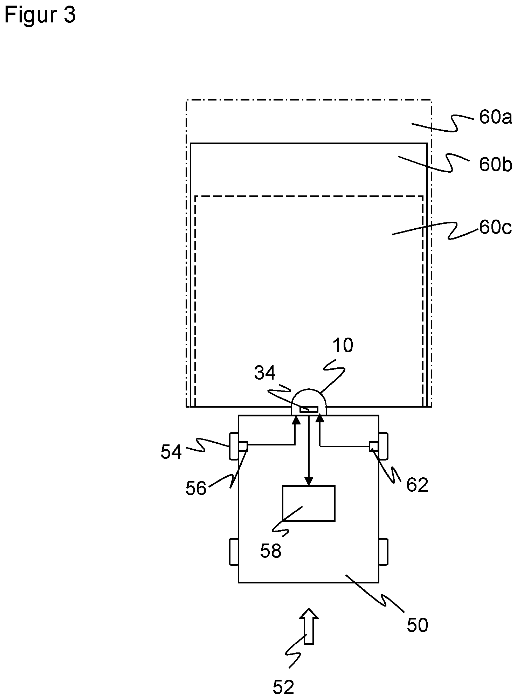

Die Inertialmesseinheit 38 dient vorzugsweise nur der Plausibilisierung, weil sie zumindest in einer kostengünstigen Ausführung, die sich insbesondere für die Integration in einen Sicherheitslaserscanner 10 eignet, für die eigentliche Geschwindigkeitsmessung zu ungenau ist. Daher ist es vorteilhaft, die Geschwindigkeit noch mit einer weiteren Quelle zu messen. Dafür wird später zu Figur 3 ein zusätzlicher Drehgeber diskutiert. Es besteht aber auch unter Bezugnahme weiterhin auf die Figur 2 die Möglichkeit, die Bewegung des Sicherheitslaserscanners 10 optisch aus dessen Distanzmessdaten zu schätzen. Dafür sind verschiedene Algorithmen denkbar, wie SLAM (Simultaneous Location And Mapping) oder optischer Fluss. Besonders geeignet ist ein Verfahren, das die mit der Zeit veränderten gemessenen Entfernungen aus aufeinanderfolgenden Scans auswertet. Die Qualität der Schätzung hängt von den Eigenschaften der Umgebung ab. Sie ist üblicherweise von hoher Genauigkeit, kann aber im Einzelfall, wie in den einleitend genannten Szenarien mit langen Gängen oder großen bewegten Objekten im Sichtfeld, auch unzuverlässig werden.

Nun wird aber einerseits unter Annahme eines starr montierten Rades 54 und bekannter fester Ortsbeziehung zur Einbauposition der Sicherheitslaserscanners 10 kontinuierlich geprüft, ob der vom Encoder ausgegebene Wert mit der von der optischen Bewegungsschätzung berechneten Geschwindigkeit verträglich ist. Dazu wird womöglich je nach Anwendung zusätzlich von der Fahrzeugsteuerung 58 die Information über den aktuellen Kurvenradius beziehungsweise bei drehbarem Rad der Lenkwinkel benötigt.

Diese bereits aus zwei Quellen bestätigte Geschwindigkeitsmessung wird außerdem wie beschrieben über die Inertialmesseinheit 38 plausibilisiert. Damit kann auch mit einem einzelnen Drehgeber 56, ohne einen redundanten zweiten Drehgeber, ein sicherer Geschwindigkeitswert ermittelt werden. Solange die mit dem Drehgeber 56 gemessene Geschwindigkeit mit dem Signal der Inertialmesseinheit 38 verträglich ist, ist sogar denkbar, kurzzeitige Unstimmigkeiten zwischen der mit dem Drehgeber 56 gemessenen Geschwindigkeit und der aus den Messdaten des Sicherheitslaserscanners 10 optisch geschätzten Geschwindigkeit beziehungsweise kurze Ausfallphasen der optischen Bewegungsschätzung überbrückt werden.

Ein Sonderfall ist der Stillstand des Fahrzeugs 50, der besonders verlässlich erkannt werden sollte, weil von einem nicht bewegten Fahrzeug 50 keine Gefahr ausgeht, und damit eine umso größere Gefahr von einem Fahrzeug 50, das fälschlich als stillstehend erkannt wird. Hier können zwei Fälle auftreten. Zum einen kann sowohl der Drehgeber 56 als auch die optische Geschwindigkeitsschätzung permanent, d.h. für zumindest einen gewissen Zeitraum, einen Stillstandwert "Null" ausgeben. Dann darf die Inertialmesseinheit 38 keine signifikante Beschleunigung ausgeben, sonst liegt ein Fehler vor. Zum anderen kann die gemessene beziehungsweise geschätzte Geschwindigkeit auf den Stillstandwert "Null" abfallen. Dann muss von der Inertialmesseinheit 38 eine dieser Geschwindigkeitsänderung beziehungsweise diesem Abbremsen entsprechende Beschleunigung gemessen werden, sonst liegt ein Fehler vor.

Nach den beschriebenen Maßnahmen ist der Steuer- und Auswertungseinheit 34 die aktuelle Geschwindigkeit des Fahrzeugs 50 auf sichere Weise bekannt. Davon abhängig wird nun eine von mehreren Konfigurationen von Schutzfeldern 60a-c ausgewählt und aktiviert, oder alternativ wird dynamisch eine Konfiguration mit Schutzfeldern 60a-c unter Berücksichtigung der aktuellen Geschwindigkeit und gegebenenfalls weiteren Parametern wie der Fahrtrichtung bestimmt. Beispielsweise wird bei hoher Geschwindigkeit ein langer Bremsweg mit einem großen Schutzfeld 60a abgesichert, das bei geringen Geschwindigkeiten unnötige Sicherheitsmaßnahmen auslösen könnte und deshalb durch ein kurzes Schutzfeld 60c ersetzt wird.

Wird während der Fahrt ein unzulässiges Objekt in einem aktiven Schutzfeld 60a-c erkannt, so wird zur Vermeidung von Zusammenstößen vor allem mit Personen, aber auch mit anderen Objekten wie weiteren Fahrzeugen ein Sicherheitssignal an die Fahrzeugsteuerung 58 ausgegeben, die einen Nothalt, ein Bremsmanöver oder ein Ausweichmanöver einleiten kann oder zunächst nur die Geschwindigkeit reduziert.

Ein Sicherheitssignal wird auch dann ausgegeben, wenn ein Fehler bei der Geschwindigkeitsbestimmung erkannt wurde, also die mit dem Drehgeber 56 gemessene Geschwindigkeit zu weit von der optischen Geschwindigkeitsschätzung abweicht und/oder nicht mit dem Signal der Inertialmesseinheit 38 verträglich ist. Es ist denkbar, solche Unstimmigkeiten für eine vorgegebene, begrenzte Dauer zu tolerieren, um nicht bei jedem Bewegungsruck einen Nothalt auszulösen. Weiterhin ist auch denkbar, auf eine als fehlerhaft erkannte Geschwindigkeitsbestimmung mit worst-case-Annahmen statt mit einer Absicherung zu reagieren. Dazu wird beispielsweise eine Maximalgeschwindigkeit des Fahrzeugs 50 unterstellt beziehungsweise vorsichtshalber auf die großzügigsten Schutzfelder 60a umgeschaltet. Eine weitere Maßnahme für höhere Verfügbarkeit ist, ein Fahrzeug 50 jeweils nicht ganz anzuhalten, sondern auf eine sichere Geschwindigkeit zu begrenzen ("Schleichfahrt").

Figur 3 zeigt nochmals ein Fahrzeug 50, dessen Fahrt mittels eines Sicherheitslaserscanners 10 abgesichert wird. Im Unterschied zu Figur 2 ist nun ein zweiter Drehgeber 62 vorgesehen, der mit einem Eingang 40, 42 des Sicherheitslaserscanners 10 verbunden ist, so dass die Geschwindigkeit redundant mit zwei Drehgebern 56, 62 erfasst wird. Der zweite Drehgeber 62 ersetzt damit funktional die optische Bewegungsschätzung in der Ausführungsform gemäß Figur 2. Es ist auch denkbar, die optische Bewegungsschätzung trotzdem durchzuführen, dann kommt eine weitere Quelle für die Geschwindigkeitsbestimmung hinzu.

Die Funktionsweise dieser Ausführungsform ist analog zu derjenigen nach Figur 2 und wird nicht erneut beschrieben. Für eine sichere Geschwindigkeitserfassung wird gefordert, dass die beiden von den Drehgebern 56, 62 gemessenen Geschwindigkeiten im Rahmen vorgegebener Toleranzen übereinstimmen. Zusätzlich zu der redundanten Erfassung mit den beiden Drehgebern 56, 62 ist eine weitere Art der Bewegungserkennung durch die in den Sicherheitslaserscanner 10 integrierte Inertialmesseinheit 38 vorgesehen.

Speziell kann durch eine Stillstandüberwachung ein gleichzeitiger Ausfall beider Drehgeber 56, 62 erkannt werden, also geprüft werden, ob die beiden Drehgeber 56, 62 valide Signale ausgeben. Diese Überprüfung geschieht anhand von zwei logischen Bedingungen: Fallen die Ausgänge beider Drehgeber 56, 62 auf den Stillstandwert "Null" ab, so muss von der Inertialmesseinheit 38 eine entsprechende Beschleunigung detektiert werden Liefern die Ausgänge beider Drehgeber 56, 62 permanent, d.h. länger als nur in einem kurzen Zeitintervall, den Stillstandwert "Null", so darf die Inertialmesseinheit 38 keine signifikanten Beschleunigungen ausgeben. Ist eine der Bedingungen verletzt, so liegt ein Fehler vor.

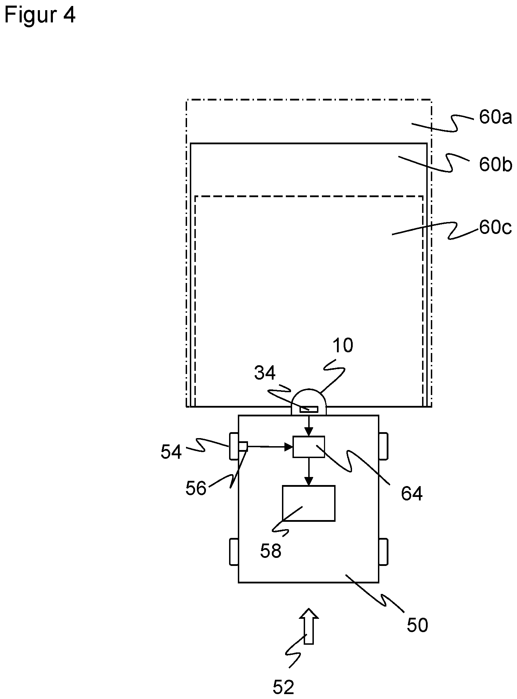

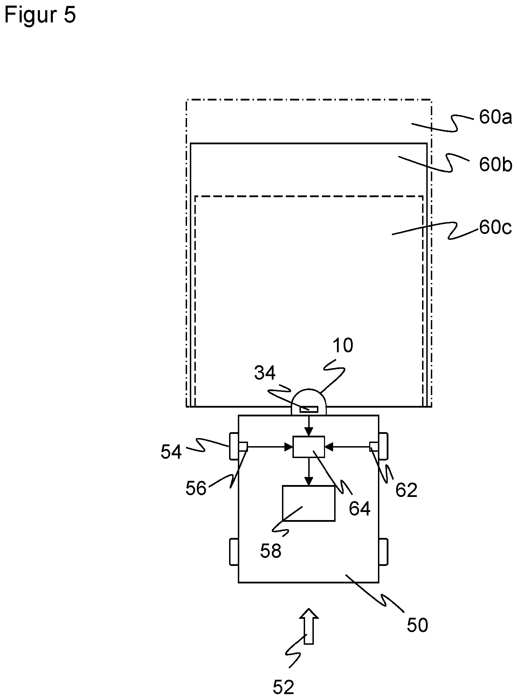

Die Figuren 4 und 5 zeigen nochmals ein Fahrzeug 50 zur Erläuterung einer weiteren Ausführungsform. Dabei basiert die Figur 4 auf der Figur 2 mit optischer Bewegungsschätzung und die Figur 5 auf der Figur 3 mit zwei Drehgebern 56, 62. Bisher wurde angenommen, dass die Inertialmesseinheit 38 und die Steuer- und Auswertungseinheit 34 Teil des Sicherheitslaserscanners 10 sind. Das ist auch die bevorzugte Ausführungsform.

Alternativ ist aber denkbar, zumindest einen Teil der Steuer- und Auswertungsfunktionalität in eine Sicherheitssteuerung 64 auszulagern, an welche der Sicherheitslaserscanner 10 und der Drehgeber 56 oder die Drehgeber 56, 62 angeschlossen sind. Eine vorteilhafte Aufgabenverteilung ist dann, dass die Steuer- und Auswertungseinheit 34 im Sicherheitslaserscanner die Lichtlaufzeitmessung und die Schutzfeldüberwachung übernimmt, während die Sicherheitssteuerung die Geschwindigkeiten auswertet und prüft und Umschaltsignale an den Sicherheitslaserscanner 10 für an die Geschwindigkeit angepasste aktive Schutzfelder 60a-c ausgibt. Es ist weiterhin denkbar, die Inertialmesseinheit 38 extern, also außerhalb des Sicherheitslaserscanners 10 vorzusehen und an den Sicherheitslaserscanner 10 beziehungsweise die Sicherheitssteuerung 64 anzuschließen.

## Patentansprüche

1. Sicherheitssystem (10, 64) zum Absichern der Umgebung eines Fahrzeugs (50), insbesondere eines fahrerlosen Fahrzeugs, wobei das Sicherheitssystem (10, 64) einen optoelektronischen Sicherheitssensor (10) zur Überwachung der Umgebung, einen ersten Eingang (40), der zur Bestimmung eines ersten Geschwindigkeitswerts für die Geschwindigkeit des Fahrzeugs (50) mit einem ersten Kinematiksensor (56) verbindbar ist, eine Inertialmesseinheit (38), um eine Bewegungsinformation des Fahrzeugs (50) zu bestimmen, und eine Steuerund Auswertungseinheit (34, 64) aufweist, die dafür ausgebildet ist, den ersten Geschwindigkeitswert und die Bewegungsinformation miteinander zu vergleichen sowie anhand von Sensordaten des Sicherheitssensors (10) Objekte in der Umgebung zu erfassen und unter Berücksichtigung der Geschwindigkeit des Fahrzeugs (50) zu bewerten, ob eine Absicherung des Fahrzeugs (50) erfolgt oder nicht,
**dadurch gekennzeichnet,**
**dass** der Sicherheitssensor (10) als Sicherheitslaserscanner ausgebildet und die Inertialmesseinheit (38) darin integriert ist.

2. Sicherheitssystem (10, 64) nach Anspruch 1,
wobei die Steuer- und Auswertungseinheit (34, 64) dafür ausgebildet ist, aus den Sensordaten des Sicherheitssensors (10) mittels optischer Geschwindigkeitsschätzung einen zweiten Geschwindigkeitswert für die Geschwindigkeit des Fahrzeugs (50) zu bestimmen.

3. Sicherheitssystem (10, 64) nach Anspruch 1,
das einen zweiten Eingang (42) aufweist, der zur Bestimmung eines zweiten Geschwindigkeitswerts für die Geschwindigkeit des Fahrzeugs (50) mit einem zweiten Kinematiksensor (62) verbindbar ist.

4. Sicherheitssystem (10, 64) nach Anspruch 3,
wobei die Steuer- und Auswertungseinheit (34, 64) dafür ausgebildet ist, die Geschwindigkeit des Fahrzeugs (50) mit Hilfe des ersten Kinematiksensors (56), des zweiten Kinematiksensors (62) und der Bewegungsinformation der Inertialmesseinheit (38) auf sichere Weise zu bestimmen.

5. Sicherheitssystem (10, 64) nach einem der Ansprüche 2 bis 4,
wobei die Steuer- und Auswertungseinheit (34, 64) dafür ausgebildet ist, den ersten Geschwindigkeitswert und den zweiten Geschwindigkeitswert und/oder den zweiten Geschwindigkeitswert und die Bewegungsinformation miteinander zu vergleichen.

6. Sicherheitssystem nach einem der Ansprüche 2 bis 5,
wobei die Steuer- und Auswertungseinheit (34, 64) dafür ausgebildet ist, im Falle eines Stillstandwertes des ersten Geschwindigkeitswerts und des zweiten Geschwindigkeitswerts zu prüfen, ob die Bewegungsinformation mit einem Stillstand des Fahrzeugs (50) verträglich ist.

7. Sicherheitssystem (10, 64) nach Anspruch 6,
wobei die Bewegungsinformation keine Bewegung anzeigen muss, wenn die Stillstandwerte über ein Zeitintervall hinweg vorliegen, und/oder wobei die Bewegungsinformation eine passende Bremsbeschleunigung anzeigen muss, wenn erster Geschwindigkeitswert und zweiter Geschwindigkeitswert auf die Stillstandwerte abfallen.

8. Sicherheitssystem (10, 64) nach einem der vorhergehenden Ansprüche,
wobei der erste Kinematiksensor (56) ein Drehgeber ist, der mindestens mittelbar mit einer Fahrzeugachse des Fahrzeugs (50) verbunden ist.

9. Sicherheitssystem (10, 64) nach einem der Ansprüche 4 bis 8, wenn rückbezogen auf Anspruch 3,
wobei der zweite Kinematiksensor (56) ein Drehgeber ist, der mindestens mittelbar mit einer Fahrzeugachse des Fahrzeugs (50) verbunden ist.

10. Sicherheitssystem (10, 64) nach einem der vorhergehenden Ansprüche,
wobei die Steuer- und Auswertungseinheit (34, 64) dafür ausgebildet ist, die Geschwindigkeit des Fahrzeugs (50) mit Hilfe des ersten Kinematiksensors (56), einer optischen Geschwindigkeitsschätzung aus den Sensordaten des Sicherheitssensors (10) und der Bewegungsinformation der Inertialmesseinheit (38) auf sichere Weise zu bestimmen.

11. Sicherheitssystem (10, 64) nach einem der vorhergehenden Ansprüche,
wobei die Steuer- und Auswertungseinheit (34) in den Sicherheitssensor (10) integriert ist.

12. Sicherheitssystem (10, 64) nach einem der vorhergehenden Ansprüche,
wobei der Sicherheitssensor (10) als Sicherheitslaserscanner mit einem Lichtsender (12) zum Aussenden eines Lichtstrahls (16), einer drehbaren Ablenkeinheit (18) zur periodischen Ablenkung des Lichtstrahls (16) die Umgebung (20), einer Winkelmesseinheit (30) zur Bestimmung einer Winkelstellung der Ablenkeinheit (18) und einem Lichtempfänger (26) zum Erzeugen eines Empfangssignals aus dem von Objekten in der Umgebung (20) remittierten oder reflektierten Lichtstrahl (22) ausgebildet ist, wobei die Steuer- und Auswertungseinheit (34) mit Hilfe des Empfangssignals eine Lichtlaufzeit zu den jeweils mit dem Lichtstrahl angetasteten Objekten bestimmt und insbesondere für die Bewertung, ob eine Absicherung des Fahrzeugs (50) erfolgt oder nicht, mindestens ein in Abhängigkeit von der Geschwindigkeit eingestelltes Schutzfeld (60a-c) auf Objekteingriffe überwacht.

13. Verfahren zum Absichern der Umgebung eines Fahrzeugs (50), insbesondere eines fahrerlosen Fahrzeugs, wobei die Umgebung mit einem optoelektronischen Sicherheitssensor (10) überwacht wird, mit Hilfe eines Kinematiksensors (56) ein erster Geschwindigkeitswerts für die Geschwindigkeit des Fahrzeugs (50) bestimmt wird, anhand von Sensordaten des Sicherheitssensors (10) Objekte in der Umgebung erfasst werden und unter Berücksichtigung der Geschwindigkeit des Fahrzeugs (50) bewertet wird, ob eine Absicherung des Fahrzeugs (50) erfolgt oder nicht, wobei mit einer Inertialmesseinheit (38) eine Bewegungsinformation des Fahrzeugs (50) bestimmt wird und der erste Geschwindigkeitswert und die Bewegungsinformation miteinander verglichen werden,
**dadurch gekennzeichnet,**
**dass** der Sicherheitssensor (10) als Sicherheitslaserscanner ausgebildet und die Inertialmesseinheit (38) darin integriert ist.

## Claims

1. A safety system (10, 64) for safeguarding a surrounding area of a vehicle (50), in particular of a driverless vehicle, the safety system (10, 64) comprising an optoelectronic safety sensor (10) for monitoring the surrounding area, a first input (40) connectable to a first kinematic sensor (56) for determining a first speed value for the speed of the vehicle (50), an inertial measurement unit (38) for determining movement information of the vehicle (50), and a control and evaluation unit (34, 64) configured to compare the first speed value and the movement information with one another and to use sensor data from the safety sensor (10) to detect objects in the surrounding area and, taking into account the speed of the vehicle (50), to evaluate whether or not a safety reaction of the vehicle (50) is initiated,
**characterized in that** the safety sensor (10) is configured as a safety laser scanner and the inertial measurement unit (38) is integrated therein.

2. The safety system (10, 64) according to claim 1,
wherein the control and evaluation unit (34, 64) is configured to determine a second speed value for the speed of the vehicle (50) from the sensor data of the safety sensor (10) by means of optical speed estimation.

3. The safety system (10, 64) according to claim 1,
comprising a second input (42) connectable to a second kinematic sensor (62) for determining a second speed value for the speed of the vehicle (50).

4. The safety system (10, 64) according to claim 3,
wherein the control and evaluation unit (34, 64) is configured to determine the speed of the vehicle (50) in a safe manner using the first kinematic sensor (56), the second kinematic sensor (62) and the motion information of the inertial measurement unit (38).

5. The safety system (10, 64) according to any of claims 2 to 4,
wherein the control and evaluation unit (34, 64) is configured to compare the first speed value and the second speed value and/or the second speed value and the movement information with each other.

6. The safety system according to any one claims 2 to 5,
wherein the control and evaluation unit (34, 64) is configured to check,
in the case of a standstill value of the first speed value and the second speed value, whether the movement information is compatible with a standstill of the vehicle (50).

7. The safety system (10, 64) according to claim 6,
wherein the motion information has to indicate no motion when the standstill values are measured over a time interval, and/or wherein the motion information has to indicate matching braking acceleration when first velocity value and second velocity value fall to the standstill values.

8. The safety system (10, 64) according to any of the preceding claims,
wherein the first kinematic sensor (56) is a rotary encoder connected at least indirectly to a vehicle axle of the vehicle (50).

9. The safety system (10, 64) according to any of claims 4 to 8, when referring to claim 3,
wherein the second kinematic sensor (56) is a rotary encoder connected at least indirectly to a vehicle axle of the vehicle (50).

10. The safety system (10, 64) according to any of the preceding claims,
wherein the control and evaluation unit (34, 64) is configured to determine the speed of the vehicle (50) in a safe manner using the first kinematic sensor (56), an optical speed estimation from the sensor data of the safety sensor (10) and the motion information of the inertial measurement unit (38).

11. The safety system (10, 64) according to any of the preceding claims,
wherein the control and evaluation unit (34) is integrated in the safety sensor (10).

12. The safety system (10, 64) according to any of the preceding claims,
wherein the safety sensor (10) is configured as a safety laser scanner having a light transmitter (12) for transmitting a light beam (16), a rotatable deflection unit (18) for periodically deflecting the light beam (16) into the surrounding area (20), an angle measuring unit (30) for determining an angular position of the deflection unit (18) and a light receiver (26) for generating a received signal from the light beam (22) remitted or reflected by objects in the surrounding area (20), the control and evaluation unit (34) using the received signal to determine a light time of flight for objects respectively scanned with the light beam and, in particular, for evaluating whether or not a safety reaction of the vehicle (50) is initiated, monitors at least one protective field (60a-c), which is set as a function of the speed, for object intrusions.

13. A method for safeguarding the surrounding area of a vehicle (50), in particular of a driverless vehicle, wherein the surrounding area is monitored with an optoelectronic safety sensor (10), a first speed value for the speed of the vehicle (50) is determined with the aid of a kinematic sensor (56), objects in the surrounding area are detected using sensor data of the safety sensor (10), and it is evaluated, taking into account the speed of the vehicle (50), whether or not a safety reaction of the vehicle (50) is initiated, wherein movement information of the vehicle (50) is determined using an inertial measurement unit (38), and the first speed value and the movement information are compared with one another,
**characterized in that** the safety sensor (10) is configured as a safety laser scanner and the inertial measurement unit (38) is integrated therein.

## Revendications

1. Système de sécurité (10, 64) pour sécuriser l'environnement d'un véhicule (50), en particulier d'un véhicule sans conducteur, le système de sécurité (10, 64) comprenant un capteur de sécurité optoélectronique (10) pour surveiller l'environnement, une première entrée (40) qui peut être connectée à un premier capteur cinématique (56) pour déterminer une première valeur de vitesse pour la vitesse du véhicule (50), une unité de mesure inertielle (38) pour déterminer une information de mouvement du véhicule (50), et une unité de commande et d'évaluation (34, 64) qui est réalisée pour comparer la première valeur de vitesse et l'information de mouvement l'une à l'autre et pour détecter, en se basant sur des données de capteur du capteur de sécurité (10), des objets dans l'environnement et pour évaluer, en tenant compte de la vitesse du véhicule (50), si une sécurisation du véhicule (50) a lieu ou non,
**caractérisé en ce que**
le capteur de sécurité (10) est réalisé sous forme de scanner laser de sécurité, et l'unité de mesure inertielle (38) est intégrée dans celui-ci.

2. Système de sécurité (10, 64) selon la revendication 1,
dans lequel l'unité de commande et d'évaluation (34, 64) est réalisée pour déterminer une deuxième valeur de vitesse pour la vitesse du véhicule (50) à partir des données de capteur du capteur de sécurité (10) au moyen d'une estimation optique de la vitesse.

3. Système de sécurité (10, 64) selon la revendication 1,
comprenant une deuxième entrée (42) qui peut être connectée à un deuxième capteur cinématique (62) pour déterminer une deuxième valeur de vitesse pour la vitesse du véhicule (50).

4. Système de sécurité (10, 64) selon la revendication 3,
dans lequel l'unité de commande et d'évaluation (34, 64) est réalisée pour déterminer de manière sûre la vitesse du véhicule (50) à l'aide du premier capteur cinématique (56), du deuxième capteur cinématique (62) et de l'information de mouvement de l'unité de mesure inertielle (38).

5. Système de sécurité (10, 64) selon l'une des revendications 2 à 4,
dans lequel l'unité de commande et d'évaluation (34, 64) est réalisée pour comparer la première valeur de vitesse et la deuxième valeur de vitesse et/ou la deuxième valeur de vitesse et l'information de mouvement l'une à l'autre.

6. Système de sécurité selon l'une des revendications 2 à 5,
dans lequel l'unité de commande et d'évaluation (34, 64) est réalisée pour vérifier, dans le cas d'une valeur d'immobilisation de la première valeur de vitesse et de la deuxième valeur de vitesse, si l'information de mouvement est compatible avec une immobilisation du véhicule (50).

7. Système de sécurité (10, 64) selon la revendication 6,
dans lequel l'information de mouvement doit indiquer l'absence de mouvement lorsque les valeurs d'immobilisation sont présentes sur un intervalle de temps, et/ou l'information de mouvement doit indiquer une accélération de freinage appropriée lorsque la première valeur de vitesse et la deuxième valeur de vitesse chutent aux valeurs d'immobilisation.

8. Système de sécurité (10, 64) selon l'une des revendications précédentes,
dans lequel le premier capteur cinématique (56) est un codeur rotatif qui est au moins indirectement connecté à un essieu du véhicule (50).

9. Système de sécurité (10, 64) selon l'une des revendications 4 à 8 prises en dépendance de la revendication 3,
dans lequel le deuxième capteur cinématique (56) est un codeur rotatif qui est au moins indirectement connecté à un essieu du véhicule (50).

10. Système de sécurité (10, 64) selon l'une des revendications précédentes,
dans lequel l'unité de commande et d'évaluation (34, 64) est réalisée pour déterminer de façon sûre la vitesse du véhicule (50) à l'aide du premier capteur cinématique (56), d'une estimation optique de la vitesse à partir des données de capteur du capteur de sécurité (10) et de l'information de mouvement de l'unité de mesure inertielle (38).

11. Système de sécurité (10, 64) selon l'une des revendications précédentes,
dans lequel l'unité de commande et d'évaluation (34) est intégrée dans le capteur de sécurité (10).

12. Système de sécurité (10, 64) selon l'une des revendications précédentes,
dans lequel le capteur de sécurité (10) est réalisé sous forme de scanner laser de sécurité comportant un émetteur de lumière (12) pour émettre un faisceau lumineux (16), une unité de déviation rotative (18) pour dévier périodiquement le faisceau lumineux (16) vers l'environnement (20), une unité de mesure d'angle (30) pour déterminer une position angulaire de l'unité de déviation (18), et un récepteur de lumière (26) pour générer un signal de réception à partir du faisceau lumineux (22) renvoyé ou réfléchi par des objets dans l'environnement (20), et l'unité de commande et d'évaluation (34) détermine, à l'aide du signal de réception, un temps de parcours de lumière vers les objets respectifs balayés par le faisceau lumineux et surveille au moins un champ de protection (60a-c) quant aux interventions par des objets, ledit champ étant réglé en fonction de la vitesse, en particulier en vue d'évaluer si une sécurisation du véhicule (50) a lieu ou non.

13. Procédé de sécurisation de l'environnement d'un véhicule (50), en particulier d'un véhicule sans conducteur, dans lequel l'environnement est surveillé au moyen d'un capteur de sécurité optoélectronique (10), une première valeur de vitesse pour la vitesse du véhicule (50) est déterminée à l'aide d'un capteur cinématique (56), des objets dans l'environnement sont détectés sur la base de données de capteur du capteur de sécurité (10), et une évaluation s'effectue en tenant compte de la vitesse du véhicule (50) pour savoir si une sécurisation du véhicule (50) a lieu ou non, une information de mouvement du véhicule (50) est déterminée à l'aide d'une unité de mesure inertielle (38), et la première valeur de vitesse et l'information de mouvement sont comparées l'une à l'autre,
**caractérisé en ce que**
le capteur de sécurité (10) est réalisé sous forme de scanner laser de sécurité, et l'unité de mesure inertielle (38) est intégrée dans celui-ci.
